# EUROPÄISCHE PATENTSCHRIFT

(11) **EP 1 900 550 B1**
(45) Veröffentlichungstag und Bekanntmachung des Hinweises auf die Patenterteilung: **26.05.2010**
(21) Anmeldenummer: 06019127.7
(22) Anmeldetag: 13.09.2006
(51) Int. Cl.: B60C 17/06

(54) **Segmentierter Notlaufstützring mit Spannmitteln**
Segmented run-flat support with tensioning means
Appui de soutien segmenté avec moyens de serrage

(43) Veröffentlichungstag der Anmeldung: 19.03.2008
(73) Patentinhaber: Europlast-Nycast GmbH, 40882 Ratingen-Homberg (DE)
(72) Erfinder: Steinbichler, Sylvia, 45481 Mülheim (DE); Bessmann, Herbert, CH-4717 Mümliswil (CH); Herrmann, Klaus, 46047 Oberhausen (DE); Seelig, Hans-Georg, 44357 Dortmund (DE)
(74) Vertreter: DR. STARK & PARTNER

(56) Entgegenhaltungen:
- US-A- 4 393 911
- US-A- 4 662 419

## Beschreibung

Die Erfindung betrifft einen verspannbaren Notlaufeinsatz gemäß Oberbegriff von Anspruch 1.

Gattungsbildende Notlaufsysteme sind in der US 4,393,911 A und der US 4,662,419 A beschrieben. Aus der Praxis sind Notlaufeinsätze bekannt, die aus mehreren formsteifen, miteinander verbundenen kreisringsegmentförmigen Teilelementen, so genannten Bogensegmenten, gebildet sind. Diese Bogensegmente werden am Mittenabschnitt der zugehörigen Felge verspannt, so dass eine Relativbewegung zwischen Felge und Notlaufeinsatz nicht erfolgt, da dies nach herrschender Meinung aufgrund des Gewichts des Notlaufeinsatzes unwuchtbedingt das Fahrverhalten des Fahrzeugs beeinflussen würde. Zudem würde bei freier Drehbarkeit ein vorzeitiger Verschleiß eintreten.

Nachteilig hierbei ist, dass trotz der drehfesten Klemmung auf der Felge bei Normalbetrieb der Notlaufeinsatz bei Notbetrieb, d. h. bei einem platten Reifen, gegenüber der Felge frei drehen können soll, wenn der Reifen mit seiner inneren Reifenlauffläche auf ihm rollt. Hierzu muss jedoch die Normalbetrieb-Klemmung zuerst einmal überwunden werden, was einen erhöhten Rollwiderstand im wegen des Luftverlustes sowieso schon instabilen Fahrzustand bedeutet. Da die Anforderungen für den Normalbetrieb (möglichst feste Klemmung) einerseits und für Notbetrieb (möglichst geringe Klemmung) andererseits gegenläufig sind, ist die genaue Einstellung eines verträglichen Mittelwertes schwierig.

Auch haben derartige vorbekannte Systeme aufgrund des mehrteiligen Aufbaus nur eine begrenzte Belastbarkeit und sind damit nicht für besonders schwere, z.B. gepanzerte Fahrzeuge oder Lastkraftwagen, einsetzbar. Derartige Fahrzeuge mit einem Gewicht über 7 Tonnen verfügen häufig über Felgen mit einem Durchmesser von mehr als 20 Zoll, wobei die Felge mehrteilig ausgebildet sein kann und eine demontierbare Radschüssel bzw. Radscheibe aufweisen kann.

Aufgabe der Erfindung ist es, die vorgenannten Nachteile zu vermeiden und einen Notlaufeinsatz anzugeben, der bessere Gebrauchseigenschaften aufweist, vorzugsweise nach dem Notfalleinsatz wieder verwendbar ist und insbesondere auch bei schweren Fahrzeugen verwendet werden kann.

Diese Aufgabe wird gelöst mit den kennzeichnenden Merkmalen von Anspruch 1. Dadurch ist zwar der Statorring drehfest auf der Felge angeordnet, der mit der Innenseite des Reifens im Notbetrieb in Kontakt stehende Rotor ist auf dem Statorring jedoch drehbar gelagert, so dass kein erhöhter Rollwiderstand gegeben ist und auch keine nennenswerte Klemmung wie bei vorbekannten Systemen überwunden werden muss. Die Fahrstabilität wird insoweit nicht noch zusätzlich durch die Wirkungsweise des Notlaufeinsatzes beeinträchtigt. Damit dient die Wulst bzw. die Anzahl der Wülste insbesondere der seitlichen Führung des Rotors und begrenzt dessen seitliche, d. h. axiale, Bewegungsmöglichkeit.

Der Statorring kann dabei seitliche, in gleicher Richtung wie die umlaufende Wulst bzw. die umlaufenden Wülste vorspringend abgewinkelte umlaufende Anschlagsflächen aufweisen. Diese können insbesondere einen größeren Abstand haben als die Breite des Rotors ist und/oder dessen durch das Lagerspiel bedingte axiale Verlagerbarkeit ist, so dass die Anschlagsflächen erst dann mit dem Rotor in Kontakt kommen, wenn die Führung durch die Wulst versagt hat bzw. überlastet ist. Somit wird eine Belastung der seitlichen Anschlagsflächen bei normalem Notbetrieb vermieden, wodurch dort keine Wärmebelastung auf die Flanken des Reifen wirkt und der Reifen insoweit nicht zusätzlich beansprucht wird.

Der Schlitz, der beispielsweise eine Umfangslänge von ca. 160 bis 200 mm haben kann, verläuft nicht quer zum Umfang des Statorrings über die gesamte Breite, sondern schräg oder er weist einen abgewinkelten Verlauf auf und ist vorteilhafterweise in zumindest zwei durch jeweils einen Längsschlitz miteinander verbundene Teilschlitze aufgeteilt. Insoweit überlappen sich seitlich dann zwei oder mehr Teilzungen, was zu einer verbesserten Stabilität führt.

Erfindungsgemäß kann zumindest eine umlaufende Wulst als eine umlaufende, sich bis zum schlitzförmigen Freiraum erstreckende nutförmige Führung ausgebildet sein, die insbesondere einen Freiraum für das Ventil des Kraftfahrzeugrades bietet, so dass die durch das Ventil eingebrachte Luft über den Freiraum mit dem Schlitz strömt und dann in das Innere des Reifens gelangt. Das Ventil wird dabei durch den Statorring nicht beeinträchtigt oder gar beschädigt. Die Breite des Statorrings kann dabei derart auf die Breite der Felge abgestimmt sein, dass selbst ohne klemmende Fixierung des Statorrings auf der Felge eine seitliche Verlagerung des Statorrings auf der Felge nicht oder nur sehr eingeschränkt erfolgen kann, wobei der jeweilige Reifenwulst jeweils zwischen Felge und Statorring sitzt.

Es sind aber auch andere Ausgestaltungen möglich und bei mehreren Wülsten können diese identische, unterschiedliche oder aufeinander abgestimmte Ausgestaltungen haben, sowohl was Höhe, Breite und Querschnitt betrifft.

Vorzugsweise kann der Statorring für zweigeteilte, einen zylindrischen Außenbereich aufweisende Felgen schwerer Fahrzeuge, die insbesondere ein Gesamtgewicht von mehr als 7 Tonnen aufweisen, ausgebildet sein und insbesondere durch Aufbiegen und Aufschieben auf diesen zylindrischen Außenbereich nach Art eines Sprengrings montierbar sein. Hierdurch ist aufgrund der Ausgestaltung des Statorrings, der insbesondere einteilig ausgebildet sein kann, und der Führung durch die umlaufende Wulst eine verbesserte Stabilität und damit eine höhere Belastbarkeit gegeben, die einen Einsatz auch bei schwereren Fahrzeugen ermöglicht. Derartige, so genannte Flachbettfelgen, weisen üblicherweise eine zylindrische Querschnittsfläche und einen demontierbaren Abschluss-Dichtring auf.

Auch kann der Statorring durch die geschlitzte Ausgestaltung mit einer Umfangslänge des Schlitzes von ca. 160 bis 200 mm mittels Zusammenbiegen in den bereits fertig montierten, innerhalb des Reifens befindlichen Rotor eingebracht werden, sofern der Umfang durch das Zusammenbiegen derart verringert wird, dass der Außendurchmesser der umlaufenden Wulst zusammengebogen kleiner ist als der Innendurchmesser des Rotors. Damit sollte die Dimensionierung des Schlitzes des Statorrings auch auf die geometrischen Abmessungen der Wulst abgestimmt sein.

Vorteilhafterweise kann der Statorring insbesondere an seinen an den schlitzförmigen Freiraum angrenzenden freien Enden Angriffsflächen für ein Werkzeug zum Aufbiegen und/oder Zusammenziehen während der Montage bzw. Demontage aufweisen, so dass eine besonders einfache Montage bzw. Demontage des Statorrings möglich ist.

Bei einem bevorzugten Ausführungsbeispiel der Erfindung kann das Spannsystem des Rotors als ein Spannschloss zur Verbindung der freien Enden der Teilelemente des Rotors ausgebildet sein, so dass eine passgenaue, aber ohne unnötiges Spiel drehbare Anbringung des Rotors auf dem Statorring erfolgen kann. Durch ein Spannschloss kann dabei bei geringem Platzbedarf eine gleichwohl kräftige und auch genau dosierbare Befestigung erfolgen, indem die Außenanker in die jeweiligen Enden der Teilelemente des Rotors insbesondere elastisch eingebracht und dort befestigt sind und durch Verdrehen des Spannschlosses die in den seitlichen Gewinden steckenden Zuganker aufeinander zubewegt werden. Es können aber auch andere Spannsysteme, wie z. B. Schraub-/Keilbauteile Verwendung finden.

Ein solches dem Stand der Technik entsprechendes Spannsystem kann bei der erfindungsgemäßen Ausführung so ausgebildet sein, dass - entgegen dem üblichen Stand der Technik - zwei Schrauben für das Spannen und Befestigen vorgesehen sind. Diese beiden Schrauben können zur besseren Verteilung der Anzugskraft auf die Enden der Teilelemente ein gemeinsames Unterlegblech durchfassen, welches vorzugsweise eine größere Anlagefläche als normgemäße Unterlegscheiben hat. Eine Verdrehsicherung für das Unterlegblech ist damit nicht erforderlich, und die Schrauben können gegen Lockerung durch die Verwendung von selbstsichernden Muttern gesichert sein, so dass keine Verklebung erforderlich ist.

Die Teilelemente des Rotors können dabei endseitig so ausgebildet sein, dass sie sich seitlich überlappen, wodurch eine erhöhte Stabilität des Rotors gegeben ist. Die Stirnflächen sind dabei so gestaltet, dass sie ineinander passen und im zusammengezogenen Zustand aneinander angepresst anliegen. Dadurch stützen sich die Teilelemente im Belastungsfall gegenseitig ab, und eine größere Belastbarkeit des Rotors resultiert.

Vorteilhafterweise kann der Rotor bzw. können seine Teilelemente auf zumindest einer Seite eine umlaufende Nut aufweisen sowie insbesondere mit einem Doppel-T-Querschnitt versehen sein.

In einer weiteren Ausgestaltung des Rotors kann die Kopffläche zum Reifenprofil hin schmaler ausgebildet sein als dessen zum Statorring hinweisende Innenfläche. Dadurch wird die Belastung auf eine größere Kontaktfläche abgetragen. Durch den trapezförmigen Querschnitt ist auch das Kippverhalten bei Schrägbelastung geringer als bei einem rechteckigen Querschnitt.

Erfindungsgemäß kann der Statorring mit einer insbesondere an- bzw. teilweise eingegossenen, dem Außenbereich der Felge zugewandten Lage aus elastischem Werkstoff, insbesondere Gummi oder Kunststoff, versehen sein, so dass durch Quetschung des elastischen Werkstoffs ein Reibschluss erzeugt wird und ein Drehen des Statorrings gegenüber der Felge nochmals sicherer verhindert wird. Auch kann der Statorring mit einer insbesondere an- bzw. teilweise eingegossenen, dem Seitenbereich der Felge zugewandten Lage aus elastischem Werkstoff, insbesondere Gummi oder Kunststoff, versehen sein, so dass durch seitliche Quetschung des elastischen Werkstoffs ein Reibschluss erzeugt wird und ein Drehen des Statorrings sowie ein seitliches Verrutschen verhindert wird. Auch werden Fertigungstoleranzen hierdurch ausgeglichen. Der elastische Werkstoff kann insbesondere ein anvulkanisiertes Gummi sein, es sind aber auch andere Werkstoffe, wie z. B. Kunststoffe bzw. Elastomere möglich.

Vorzugsweise kann der Rotor aus einem Thermoplast bzw. einen insbesondere elastomer modifizierten Gußpolyamid bestehen.

In einer Sonderausführung kann der Rotor außenseitig eine Lauffläche aus einem Elastomer aufweisen, so dass eine eher weiche Lauffläche vorgesehen ist, die das Innere des Reifens, z.B. auch bei Fahrten mit absichtlich abgelassener Luft, beispielsweise bei Durchquerung niedriger Durchfahrtshöhen, vor Beschädigungen schützt.

Dabei kann die Lauffläche durch eine Hinterschneidung, insbesondere in Form einer Schwalbenschwanzverbindung, am Rotor gehalten sein, so dass eine technisch einfache, aber dennoch stabile und belastbare Befestigung der Lauffläche am Rotorring ohne zusätzliche Befestigungsmittel, die sich zudem lösen könnten, gegeben ist.

Erfindungsgemäß kann der Statorring an seinen seitlichen Kanten sich in Richtung des Rotors erstreckende, als umlaufende Führungsvorsprünge ausgebildete Anschlagsflächen aufweisen, welche ebenfalls zur seitlichen Führung des Rotors dienen.

Weiterhin kann der Statorring in Längsrichtung geteilt bzw. mehrteilig ausgebildet sein.

Auch kann ein Zwischenring zur Anpassung an eine Tiefbettfelge mit über der Breite uneinheitlichem Durchmesser vorgesehen sein, so dass auch bei einer solchen Felge ein standardmäßig für zylindrische Felgenbetten vorgesehener Stator eingesetzt werden kann.

Vorzugsweise zwischen Statorring und Rotor wenigstens ein Zwischenelement zur Vermeidung einer Relativverdrehung im normalen Fahrbetrieb vorgesehen sein.

Erfindungsgemäß kann der schlitzförmige Freiraum des Statorrings durch ein einsetzbares Pass-Stück verschließbar sein, so dass der durch den Schlitz gebildete freie Umfangsbereich des Statorrings geschlossen ist und damit eine durch Beulenbildung des Rotors verursachtes Schleifen an den Kanten des Schlitzes vermieden wird, was zu einem Abschaben des Rotors führen kann. Das Pass-Stück und der Statorring können dabei zunächst als ein einstückiger Ring hergestellt werden und das Pass-Stück kann aus diesem Ring ausgesägt sein.

Dabei können das Pass-Stück und die freien Enden des Statorrings durch geeignete Verbindungsmittel miteinander verbindbar sein, so dass ein Lösen oder unbeabsichtigtes Verlagern des Pass-Stücks sicher vermieden wird.

Im Folgenden werden in der Zeichnung dargestellte Ausführungsbeispiele der Erfindung erläutert. Es zeigen in schematischen Schnittdarstellungen:
- Fig. 1: ein erstes Ausführungsbeispiel der Erfindung eines erfindungsgemäßen Notlaufeinsatzes,
- Fig. 2: ein zweites Ausführungsbeispiel eines erfindungsgemäßen Notlaufeinsatzes,
- Fig. 3: eine Detailansicht eines zweigeteilt ausgebildeten Statorrings eines erfindungsgemäßen Notlaufeinsatz,
- Fig. 4: alternative Ausgestaltungen der Wülste und elastomeren Anteile eines einteilig ausgebildeten Statorrings eines erfindungsgemäßen Notlaufeinsatz,
- Fig. 5: eine Detailansicht der Verbindung zwischen Statorring und Rotor bei einem erfindungsgemäßen Notlaufeinsatz, und
- Fig. 6: den Verbindungsbereich von zwei Teilelementen des Rotors eines erfindungsgemäßen Notlaufeinsatzes mit noch nicht gespanntem Keil-Spannsystems sowie
- Fig. 7: den Gegenstand nach Fig. 6 mit gespanntem Keil-Spannsystems.

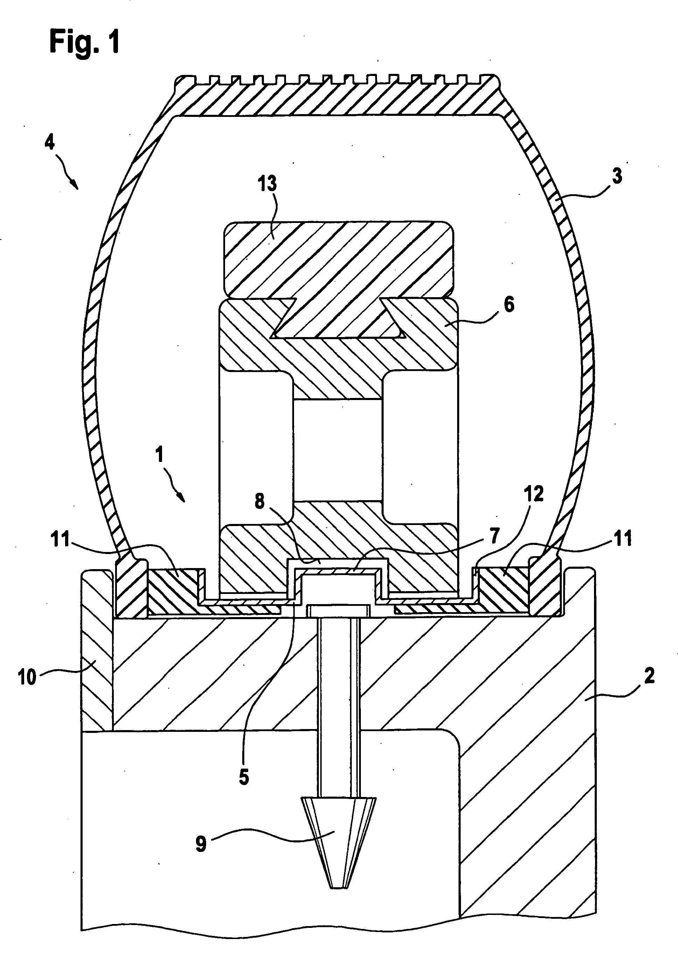

Figur 1 zeigt einen verspannbaren Notlaufeinsatz 1 für ein aus Felge 2 und darauf angeordneter Luftbereifung 3 bestehendes Kraftfahrzeugrad 4. Der Notlaufeinsatz 1 ist dabei zweigeteilt ausgebildet und beinhaltet einen auf der Felge 2 angebrachten Statorring 5 und einen auf dem Statorring 5 aufsitzenden Rotor 6, der sich wiederum aus kreisringsegmentförmigen, gelenkig miteinander verbundenen oder über einen in der Zeichnung nicht dargestelltes Spannsystem miteinander verspannbaren Teilelementen zusammensetzt. Der Statorring 5 weist in Umfangsrichtung einen Schlitz auf, dessen Bereite in etwa ⅓ des Durchmessers betragen kann. Im Querschnitt gesehen ist der Statorring 5 mit einer in etwa mittig umlaufenden sich in Richtung des Rotors 6 erstreckenden mäanderförmigen Wulst 7 versehen, die mit einer entsprechenden Gegenausnehmung 8 des Rotors 6 zusammen als Führung für den Rotor 6 ausgebildet ist.

Der insoweit im Inneren der nutförmigen Wulst 7 gebildete Freiraum erstreckt sich bis zu der schlitzförmigen Ausnehmung des Statorrings 5, so dass hierdurch die durch ein an der Felge 2 angebrachtes Ventil 9 eintretende Luft in das Innere der Luftbereifung 3 gelangen kann und diese füllt. Die in der Zeichnung dargestellte Felge 2 ist eine so genannte Flachbettfelge mit zylindrischer Querschnittsfläche und einem demontierbaren Abschluss-Dichtring 10.

Der Statorring 5 hat sowohl auf seiner dem Außenbereich der Felge 2 zugewandten Seite als auch seitlich jeweils eine Lage aus elastischem Gummi 11, wobei die seitliche Gummi-Lage 11 durch von der Felge 2 weg auswärts weisende abgewinkelte umlaufende Anschlagsflächen 12 gehalten ist und zwischen diesen Anschlagflächen 12, die gleichhoch oder insbesondere unterschiedlich hoch sein können, und dem wulstförmigen Innenteil der Luftbereifung 3 eingeklemmt ist.

Der Quersteg der doppel-T-förmigen Ausgestaltung des Rotors 5 kann zur Gewichtserleichterung mit Aussparungen, insbesondere Bohrungen versehen sein, die jedoch nicht gleichmäßig über den Umfang verteilt ausgebildet sein müssen.

Der vorzugsweise aus einem Thermoplast bestehende Rotor 6 weist außenseitig eine Lauffläche 13 aus einem Elastomer auf, die beispielsweise durch eine Schwalbenschwanzverbindung am Rotor 6 gehalten ist. Alternativ sind auch andere Befestigungsarten möglich.

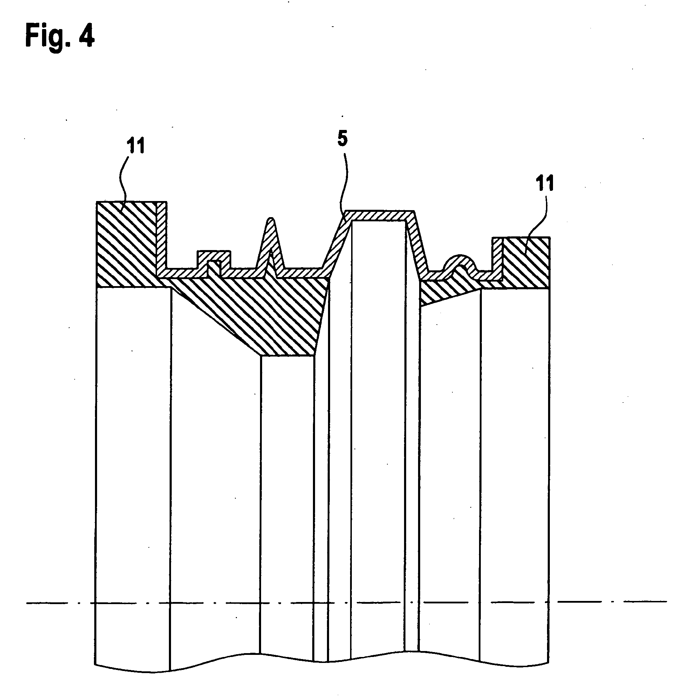

Die Anschlagsflächen 12 können in Bezug auf den Rotor 6 auch als Führungsvorsprünge fungieren und hierfür insbesondere umlaufend ausgebildet sein und/oder gleichhoch oder insbesondere unterschiedlich hoch ausgebildet sein können, wie dies in Fig. 4 dargestellt ist.

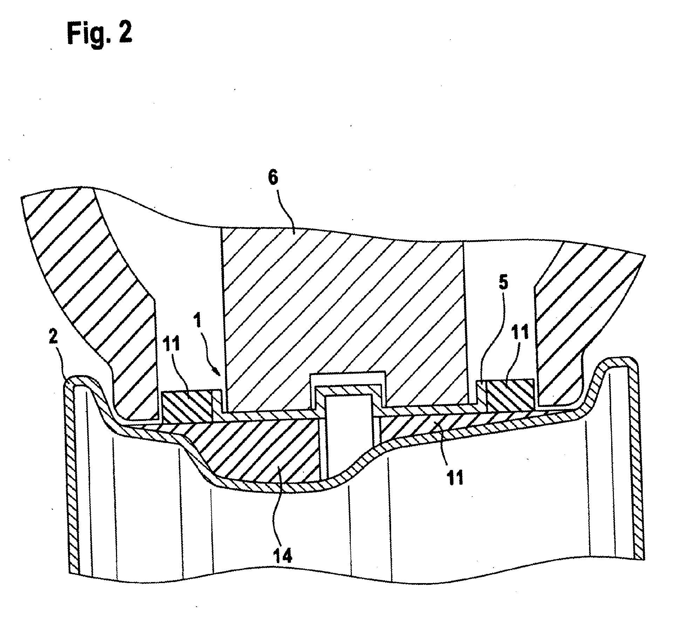

Fig. 2 zeigt ein alternatives Ausführungsbeispiel eines erfindungsgemäßen mehrteiligen Notlaufeinsatzes 1, der auf einer Felge 2 angeordnet ist. Hierbei handelt es sich um eine so genannte Tiefbettfelge mit einem nicht zylindrischen, sondern mit einem Profil versehenen Felgenbett. Zur Anpassung an dieses Profil ist die elastische Gummi-Lage 11 mehrteilig ausgebildet und in seitliche Bereiche sowie in einen zwischen dem Statorring 5 und dem Rotor 6 befindlichen Teil getrennt. Der insoweit als Zwischenring 14 ausgebildete Teil der Gummi-Lage 11 ist dabei an das Profil der Felge 2 angepasst, so dass auch bei einer solchen Felge 2 ein standardmäßig für zylindrische Felgenbetten vorgesehener Stator eingesetzt werden kann.

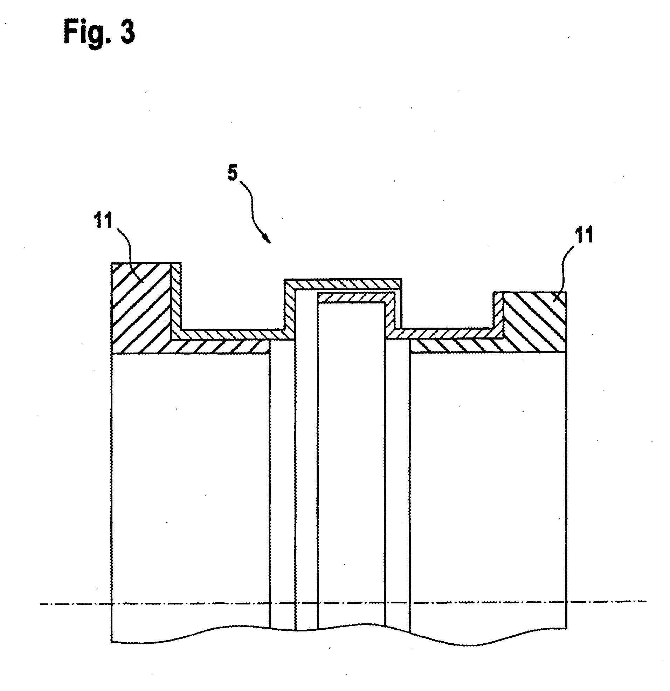

Fig. 3 zeigt einen Statorring 5 mit daran angeordneter elastischen Gummi-Lage 11, wobei sowohl der Statorring 5 als auch die elastische Gummi-Lage 11 jeweils zweigeteilt ausgebildet sind. Der Statorring 5 ist dabei mittig geteilt und weist zwei einander überlappende Teilbereiche auf, die im dargestellten Ausführungsbeispiel im Bereich der umlaufen Wulst vorgesehen sind, aber auch an anderer Stelle liegen können.

In Fig. 4 sind alternative Ausprägungen sowohl des Statorrings 5 als auch der elastischen Gummi-Lage 11 gezeigt, wobei der Statorring 5 insgesamt vier umlaufende Wülste unterschiedlicher Breite, Höhe und Form aufweist und die der Felge 2 zugewandten Seite der Gummi-Lage 11 eine Profilierung entsprechend dem Felgenbett der in der Zeichnung nicht dargestellten Felge hat. Ein Zwischenring ist insoweit bei einer solchen Ausgestaltung nicht erforderlich.

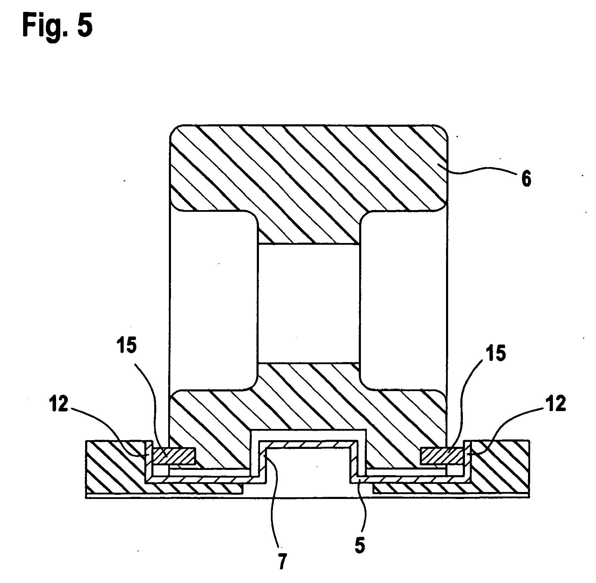

Wie aus Fig. 5 ersichtlich, kann zur Vermeidung eines Verdrehens bzw. Rotierens des Rotors 6 auf dem Statorring 5 bei normalem Fahrbetrieb ein Zwischenelement 15 vorgesehen sein, wobei durch die Belastung im Notfallbetrieb die durch das Zwischenelement erzeugte Klemmwirkung aufgehoben wird, so dass dann ein freies Drehen des Rotors 6 auf dem Statorring 5 erfolgen kann. Hierzu kann das Zwischenelement 15 insbesondere zwischen den radial ausgerichteten Bereichen von Rotor 6 und Statorring 5 vorgesehen sein, so dass es nicht zwischen den beim Notlaufbetrieb unter radialer Last stehenden Flächen von Statorring 5 und Rotor 6 vorgesehen ist. Insoweit kann das Zwischenelement 15 ringförmig ausgebildet sein.

Vorzugsweise kann das Spiel zwischen den mit den radialen Flächen der Wulst 7 in Kontakt stehenden Bereichen des Rotors 6 geringer sein als das Spiel zwischen den radialen Anschlagsflächen 12 und dem Rotor 6. Damit tritt eine Führung durch die Anschlagsflächen 12 erst dann auf, wenn die Führung durch die radialen Flächen der Wulst 7 überbelastet wird.

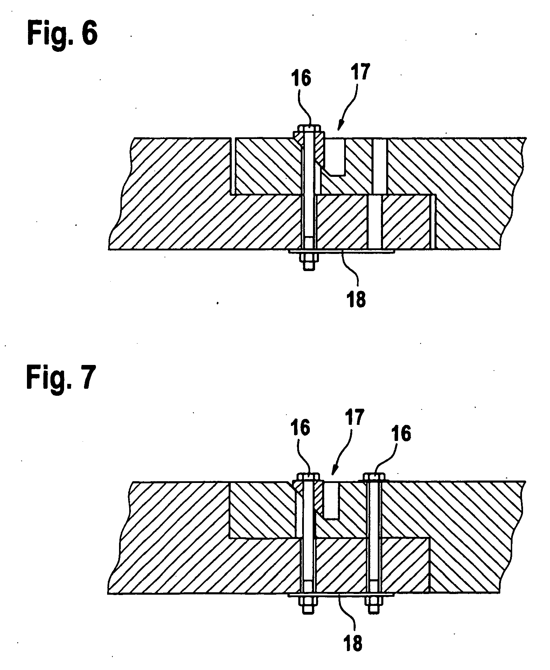

Fig. 6 zeigt den Verbindungsbereich der Teilelemente des Rotors 6, wobei zwei als Schraube 16 ausgebildete Verbindungselemente zur weiteren Stabilisierung der Überlappungsverbindung vorgesehen sein kann. Damit wird im Lastfalle bei Notlaufbetrieb eine Verformung der Überlappung verhindert.

In dem gezeigten Ausführungsbeispiel ist die Verschraubung auch ohne Gewindehülse ausgebildet und eine Schraubenöffnung liegt innerhalb der Keilschräge des noch nicht angezogenen Keil-Spannsystems, wodurch der Keil kleiner und leichter ausgebildet sein kann.

Wie aus Fig. 7 ersichtlich, werden aufgrund des Anziehens des Keil-Spannsystems durch Drehen der Schraube 16 die Teilelemente des Rotors 6 aufeinander zu gezogen, bis sie aneinander anliegen. Erst dann kann die zweite Verschraubung erfolgen.

Die beiden Schrauben 16 durchfassen zur besseren Verteilung der Anzugskraft auf die Enden der Teilelemente des Rotors 6 ein gemeinsames Unterlegblech 18, welches eine größere Anlagefläche als normgemäße Unterlegscheiben hat. Eine Verdrehsicherung für das Unterlegblech 18 ist damit nicht erforderlich, und die Schrauben 16 können gegen Lockerung durch die Verwendung von selbstsichernden Muttern gesichert sein, so dass keine Verklebung erforderlich ist.

## Patentansprüche

1. Verspannbarer Notlaufeinsatz (1) für ein aus Felge (2) und darauf angeordneter Luftbereifung (3) bestehendes Kraftfahrzeugrad (4), bestehend aus wenigstens zwei, insbesondere drei kreisringsegmentförmigen Teilelementen, die entweder gelenkig miteinander verbundenen sind oder über ein Spannsystem miteinander verspannbar sind, wobei der Notlaufeinsatz (1) mehrteilig ausgebildet ist und auch einen auf der Außenseite der Felge (2) anbringbaren, in Umfangsrichtung mit einem schlitzförmigen Freiraum geschlitzt ausgebildeten Statorring (5) umfasst und die Teilelemente als auf dem Statorring (5) montierbarer Rotor (6) ausgebildet sind, wobei der Statorring (5) zumindest einen in etwa mittig umlaufenden, sich in Richtung des Rotors (6) erstreckenden Wulst (7) aufweist, der mit wenigstens einer entsprechenden Gegenausnehmung (8) des Rotors (6) zusammen als Führung für den Rotor (6) ausgebildet ist, **dadurch gekennzeichnet, dass** der Schlitz entweder einen abgewinkelten Verlauf aufweist und vorteilhafterweise in zumindest zwei durch jeweils einen Längsschlitz miteinander verbundene Teilschlitze aufgeteilt ist oder aber der Schlitz nicht quer zum Umfang des Statorrings über die gesamte Breite, sondern schräg verläuft.

2. Notlaufeinsatz (1) nach dem vorhergehenden Anspruch, **dadurch gekennzeichnet, dass** zumindest eine umlaufende Wulst (7) als eine umlaufende, sich bis zum schlitzförmigen Freiraum erstreckende nutförmige Führung ausgebildet ist, die insbesondere einen Freiraum für das Ventil (10) des Kraftfahrzeugrades (4) bietet.

3. Notlaufeinsatz (1) nach einem der vorhergehenden Ansprüche, **dadurch gekennzeichnet, dass** der Statorring (5) für zweigeteilte, einen zylindrischen Außenbereich aufweisende Felgen (2) schwerer Fahrzeuge ausgebildet ist und insbesondere durch Aufbiegen und Aufschieben auf diesen zylindrischen Außenbereich montierbar ist.

4. Notlaufeinsatz (1) nach einem der vorhergehenden Ansprüche, **dadurch gekennzeichnet, dass** der Statorring (5) insbesondere an seinen freien Enden Angriffsflächen für ein Werkzeug zum Aufbiegen und/oder Zusammenziehen während der Montage bzw. Demontage aufweist.

5. Notlaufeinsatz (1) nach einem der vorhergehenden Ansprüche, **dadurch gekennzeichnet, dass** das Spannsystem als ein Spannschloss zur Verbindung der an den schlitzförmigen Freiraum angrenzenden freien Enden der Teilelemente des Rotors (6) ausgebildet ist.

6. Notlaufeinsatz (1) nach einem der vorhergehenden Ansprüche, **dadurch gekennzeichnet, dass** der Statorring (5) mit einer insbesondere an oder teilweise eingegossenen, dem Außenbereich der Felge (2) zugewandten Lage (11) aus elastischem Werkstoff, insbesondere Gummi oder Kunststoff, versehen ist.

7. Notlaufeinsatz (1) nach einem der vorhergehenden Ansprüche, **dadurch gekennzeichnet, dass** der Rotor (6) aus einem Thermoplast besteht.

8. Notlaufeinsatz (1) nach einem der vorhergehenden Ansprüche, **dadurch gekennzeichnet, dass** der Rotor (6) außenseitig eine Lauffläche (13) aus einem Elastomer aufweist.

9. Notlaufeinsatz (1) nach dem vorhergehenden Anspruch, **dadurch gekennzeichnet, dass** die Lauffläche (13) durch eine Hinterschneidung, insbesondere in Form einer Schwalbenschwanzverbindung, am Rotor (5) gehalten ist.

10. Notlaufeinsatz (1) nach dem vorhergehenden Anspruch, **dadurch gekennzeichnet, dass** der Statorring (5) an seinen seitlichen Kanten sich in Richtung des Rotors (6) erstreckende umlaufende Führungsvorsprünge (12) aufweist.

11. Notlaufeinsatz (1) nach dem vorhergehenden Anspruch, **dadurch gekennzeichnet, dass** der Statorring (5) in Längsrichtung geteilt bzw. mehrteilig ausgebildet ist.

12. Notlaufeinsatz (1) nach dem vorhergehenden Anspruch, **dadurch gekennzeichnet, dass** ein Zwischenring (14) zur Anpassung an eine Tiefbettfelge mit über der Breite uneinheitlichem Durchmesser vorgesehen ist.

13. Notlaufeinsatz (1) nach dem vorhergehenden Anspruch, **dadurch gekennzeichnet, dass** zwischen Statorring (5) und Rotor (6) wenigstens ein Zwischenelement (15) zur Vermeidung einer Relativverdrehung im normalen Fahrbetrieb vorgesehen ist.

14. Notlaufeinsatz (1) nach einem der vorhergehenden Ansprüche, **dadurch gekennzeichnet, dass** der schlitzförmige Freiraum des Statorrings (5) durch ein einsetzbares Pass-Stück verschließbar ist.

15. Notlaufeinsatz (1) nach dem vorhergehenden Anspruch, **dadurch gekennzeichnet, dass** das Pass-Stück und die freien Enden des Statorrings (5) durch geeignete Verbindungsmittel miteinander verbindbar sind.

## Claims

1. Tensionable run-flat support (1) for a motor vehicle wheel (4) consisting of a rim (2) and pneumatic tyre (3) arranged thereon, consisting of at least two, in particular three ring segment-shaped partial elements, which are either hinged together or can be tensioned relative to each other by means of a tensioning system, the run-flat support (1) being multipart by design and also comprising a stator ring (5) which can be attached to the outer side of the rim (2) and is slotted by design with a slotted free space in the direction of the perimeter and the partial elements are designed as a rotor (6) which can be mounted on the stator ring (5), the stator ring (5) having at least one bead (7) running circumferentially approximately around the middle and extending in the direction of the rotor (6), said bead being designed; together with at least one corresponding counter-recess (8) of the rotor (6), as a guide for the rotor (6), **characterised in that** the slot either has an angled course and is advantageously divided into at least two partial slots which are connected to each other by a longitudinal slot or else the slot does not run transversally to the circumference of the stator ring over the entire width, but diagonally.

2. Run-flat support (1) according to the preceding claim, **characterised in that** at least one circumferential bead (7) is designed as a circumferential groove-type guide extending to the slot-shaped free space, said guide in particular offering a free space for the valve (10) of the vehicle wheel (4).

3. Run-flat support (1) according to the preceding claim, **characterised in that** the stator ring (5) is designed for rims (2) of heavy vehicles, having a cylindrical outer area and divided into two parts, and in particular can be fitted by bending open and sliding onto this cylindrical outer area.

4. Run-flat support (1) according to one of the preceding claims, **characterised in that** the stator ring (5), in particular at its free ends, has working surfaces for a tool for bending open and/or tightening during fitting and removal.

5. Run-flat support (1) according to one of the preceding claims, **characterised in that** the tensioning system is designed as a turnbuckle for connecting the free ends of the partial elements of the rotor (6) adjacent the slot shaped free space.

6. Run-flat support (1) according to one of the preceding claims, **characterised in that** the stator ring (5) is provided with a layer (11) of elastic material, especially rubber or plastic, especially moulded on or partially moulded in, facing towards the outer area of the rim (2).

7. Run-flat support (1) according to one of the preceding claims, **characterised in that** the rotor (6) is made from a thermoplastic.

8. Run-flat support (1) according to one of the preceding claims, **characterised in that** the rotor (6) has an external running tread (13) made from an elastomer.

9. Run-flat support (1) according to one of the preceding claims, **characterised in that** the running tread (13) is retained on the rotor (5) by an undercut, in particular in the form of a dovetail joint.

10. Run-flat support (1) according to the preceding claim, **characterised in that** the stator ring (5) has circumferential guiding projections (12) on its lateral edges extending in the direction of the rotor (6).

11. Run-flat support (1) according to the preceding claim, **characterised in that** the stator ring (5) is divided or multipart by design in the longitudinal axis.

12. Run-flat support (1) according to the preceding claim, **characterised in that** an intermediate ring (14) is provided for adaptation to a drop centre rim with a diameter which is not uniform over the width thereof.

13. Run-flat support (1) according to the preceding claim, **characterised in that** at least one intermediate element (15) is provided between stator ring (5) and rotor (6) to prevent any relative torsion in normal driving mode.

14. Run-flat support (1) according to one of the preceding claims, **characterised in that** the slot-shaped free space of the stator ring (5) can be sealed off by an insertable fitting piece.

15. Run-flat support (1) according to the preceding claim, **characterised in that** the fitting piece and the free ends of the stator ring (5) can be joined together by suitable connecting means.

## Revendications

1. Elément intégrable (1) apte au serrage rapporté, conçu pour autoriser le roulement d'urgence d'une roue (4) de véhicule automobile constituée d'une jante (2) et d'un bandage pneumatique (3) disposé sur cette dernière, composé d'au moins deux, notamment de trois éléments partiels en forme de segments d'anneaux circulaires qui sont reliés mutuellement de manière articulée, ou bien peuvent être solidarisés par serrage au moyen d'un système de serrage, ledit élément intégrable (1) de roulement d'urgence étant réalisé en plusieurs parties et englobant, également, une bague statorique (5) qui peut être mise en place sur la face extérieure de la jante (2) et offre, dans la direction périphérique, une réalisation fendue à espace libre en forme de fente, lesdits éléments partiels se présentant comme un rotor (6) pouvant être monté sur ladite bague statorique (5), laquelle bague statorique (5) comporte au moins un bourrelet (7) qui occupe une position circonférentielle sensiblement centrale, s'étend en direction du rotor (6) et est réalisé comme un guide dédié audit rotor (6), en coopérant avec au moins un évidement complémentaire correspondant (8) dudit rotor (6), **caractérisé par le fait que** la fente présente un tracé coudé et est scindée, de manière avantageuse, en au moins deux fentes partielles reliées l'une à l'autre par l'intermédiaire d'une fente longitudinale respective ; ou bien ladite fente offre un tracé qui est non pas transversal vis-à-vis du pourtour de la bague statorique, sur l'intégralité de la largeur, mais s'étend à l'oblique.

2. Elément intégrable (1) de roulement d'urgence selon la revendication précédente, **caractérisé par le fait qu'**au moins un bourrelet circonférentiel (7) se présente comme un guide circonférentiel en forme de rainure, qui s'étend jusqu'à l'espace libre en forme de fente et procure, en particulier, un espace libre affecté à la valve (10) de la roue (4) de véhicule automobile.

3. Elément intégrable (1) de roulement d'urgence selon l'une des revendications précédentes, **caractérisé par le fait que** la bague statorique (5) est conçue pour des jantes (2) de véhicules lourds, scindées en deux parties et dotées d'une région extérieure cylindrique, et peut notamment être montée, sur cette région extérieure cylindrique, par flexion et par enfilement.

4. Elément intégrable (1) de roulement d'urgence selon l'une des revendications précédentes, **caractérisé par le fait que** la bague statorique (5) est munie, en particulier à ses extrémités libres, de surfaces de venue en prise d'un outil en vue de la flexion et/ou de la contraction au stade respectif du montage, ou du démontage.

5. Elément intégrable (1) de roulement d'urgence selon l'une des revendications précédentes, **caractérisé par le fait que** le système de serrage est réalisé sous la forme d'une lanterne de serrage destinée à relier les extrémités libres des éléments partiels du rotor (6), qui sont adjacentes à l'espace libre en forme de fente.

6. Elément intégrable (1) de roulement d'urgence selon l'une des revendications précédentes, **caractérisé par le fait que** la bague statorique (5) est pourvue d'une couche (11) en un matériau élastique, notamment en caoutchouc ou en matière plastique, qui est tournée vers la région extérieure de la jante (2) et est, en particulier, rapportée ou partiellement intégrée par coulée.

7. Elément intégrable (1) de roulement d'urgence selon l'une des revendications précédentes, **caractérisé par le fait que** le rotor (6) consiste en une matière thermoplastique.

8. Elément intégrable (1) de roulement d'urgence selon l'une des revendications précédentes, **caractérisé par le fait que** le rotor (6) est muni, à sa face extérieure, d'une surface de roulement (13) en un élastomère.

9. Elément intégrable (1) de roulement d'urgence selon l'une des revendications précédentes, **caractérisé par le fait que** la surface de roulement (13) est retenue sur le rotor (6) par l'entremise d'une contre-dépouille revêtant, en particulier, la forme d'une solidarisation par queue d'aronde.

10. Elément intégrable (1) de roulement d'urgence selon l'une des revendications précédentes, **caractérisé par le fait que** la bague statorique (5) comporte, sur ses arêtes latérales, des protubérances circonférentielles de guidage (12) s'étendant en direction du rotor (6).

11. Elément intégrable (1) de roulement d'urgence selon l'une des revendications précédentes, **caractérisé par le fait que** la bague statorique (5) offre, dans la direction longitudinale, une réalisation respectivement scindée ou comptant plusieurs parties.

12. Elément intégrable (1) de roulement d'urgence selon l'une des revendications précédentes, **caractérisé par le fait qu'**une bague intercalaire (14) est prévue pour l'adaptation à une jante à base creuse, munie d'un diamètre unitaire sur la largeur.

13. Elément intégrable (1) de roulement d'urgence selon l'une des revendications précédentes, **caractérisé par le fait qu'**au moins un élément intercalaire (15) est prévu, entre la bague statorique (5) et le rotor (6), pour éviter une distorsion relative en mode déplacement normal.

14. Elément intégrable (1) de roulement d'urgence selon l'une des revendications précédentes, **caractérisé par le fait que** l'espace libre de la bague statorique (5), configuré en une fente, peut être obturé par une pièce insérable d'adaptation.

15. Elément intégrable (1) de roulement d'urgence selon l'une des revendications précédentes, **caractérisé par le fait que** la pièce d'adaptation, et les extrémités libres de la bague statorique (5), peuvent être reliées mutuellement par des moyens de liaison adéquats.
